# EUROPEAN PATENT APPLICATION

(11) **EP 2 657 855 A1**
(43) Date of publication of application: **30.10.2013**
(21) Application number: 11851529.5
(22) Date of filing: 21.12.2011
(51) Int. Cl.: G06F 17/30

(54) **METHOD, DEVICE AND SYSTEM FOR PROCESSING PUBLIC OPINION TOPICS**

(30) Priority: 21.12.2010 CN 201010614703
(71) Applicant: Peking University Founder Group Co., Ltd, Haidian District Beijing 100871 (CN); Peking University, Beijing 100871 (CN); Beijing Founder Electronics Co., Ltd., Haidian District, Beijing 100085 (CN); Peking University Founder R&D Center, Beijing 100871 (CN)
(72) Inventor: ZHANG, Dan, Beijing 100085 (CN); YANG, Jianwu, Beijing 100085 (CN); LIANG, Rufeng, Beijing 100085 (CN); WU, Xinli, Beijing 100085 (CN)
(74) Representative: Delumeau, François Guy
(86) International application number: PCT/CN2011/084381
(87) International publication number: WO 2012/083856

(57) **Abstract**

The application relates to communication technology field, in particular to a method, an apparatus and a system for processing a public sentiment topic. The method comprises steps of searching a public sentiment topic containing public sentiment information through a network; acquiring characteristic information of the searched public sentiment topic; determining whether the acquired characteristic information of the public sentiment topic meets an alarming condition; and if yes, storing the public sentiment topic and its characteristic information. According to the method, apparatus and system for processing the public sentiment topic provided in embodiments of the present application, it can be determined whether or not an alarm for the public sentiment topic shall be issued by acquiring and determining the characteristic information of the public sentiment topic. In addition, the public sentiment topic can be managed and tracked sequentially to acquire the change trend of propagation, hits and comments thereof, so that the public sentiment topic can be understood comprehensively. The public sentiment topic can also be analyzed and arranged to generate a public sentiment brief report.

## Description

### Technical Field

The present application relates to a communication technology field, in particular, to a method, an apparatus and a system for processing public sentiment topics.

### Background

With its rapid development, internet has been more and more popular to discuss and broadcast the public sentiment events. Various media coverage of events is reproduced in many news websites continually. More and more people are willing to express their ideas for the public sentiment events in various interactive communities owing to characteristics of internet, like virtuality, invisibility, diffusivity and permeability. However, since information rapidly spread through the internet, the explosions of public sentiment in the internet is posing a risk to the social public safety through a form of "content threatening". Meanwhile, it is more and more difficult to comprehensively control the expansion, diffusion and comments for public sentiment topics, which in turn makes the developing trend of public sentiment events uncontrollable.

### Summary

Embodiments of the present application provides a method, an apparatus and a system for processing public sentiment topics so as to determine if an alarming for the public sentiment topic shall be issued based on the characteristic information of the public sentiment topic.

According embodiments of the present application, a method for processing a public sentiment topic is provided. The method may comprise:
searching a public sentiment topic containing public sentiment information through a network;
acquiring characteristic information of the searched public sentiment topic;
determining whether the acquired characteristic information meets an alarming condition; and
if yes, storing the searched public sentiment topic and the acquired characteristic information.

According embodiments of the present application, an apparatus for processing a public sentiment topic is provided. The apparatus comprises:
a searching module configured to search out a public sentiment topic containing public sentiment information in a network;
an acquiring module configured to acquire characteristic information of the searched public sentiment topic;
a determining module configured to determine whether the acquired characteristic information meets an alarming condition; and
a storage module configured to store the searched public sentiment topic and acquired characteristic information if the acquired characteristic information meets an alarming condition.

According embodiments of the present application, a system for processing a public sentiment topic is provided. The system comprises:
a network-side server configured to provide a public sentiment topic containing public sentiment information; and
a device for processing a public sentiment topic configured to search out a public sentiment topic containing the public sentiment information, acquire characteristic information of the searched public sentiment topic, determine whether the characteristic information of the acquired public sentiment topic meets an alarming condition and store the determined public sentiment topic and its characteristic information if the characteristic information of the acquired public sentiment topic meets the alarming condition.

The method, the apparatus and the system for processing a public sentiment topic are provided according to embodiments of the application. a public sentiment topic containing public sentiment information is firstly searched out through a network, and characteristic information of the searched public sentiment topic is acquired. It is determined whether the acquired characteristic information of the public sentiment topic meets an alarming condition; and if yes, the public sentiment topic and its characteristic information will be stored. According to the method, apparatus and system for processing the public sentiment topic, it can be determined if an alarm for the public sentiment topic shall be issued by acquiring and checking the characteristic information of the public sentiment topic. In addition, the public sentiment topics can be managed and tracked sequentially to acquire the change trend of propagation, hits and comments thereof, so that the public sentiment topic can be understood comprehensively. The public sentiment topic can also be analyzed and arranged to generate a public sentiment brief report.

### Brief Description of the Drawing

Fig. 1 is a schematic diagram of flowchart of a method for processing public sentiment topics according to one embodiment of the present application.

Fig. 2 is a schematic diagram of flowchart of a method for processing public sentiment topic according to another embodiment of the present application.

Fig. 3 is a schematic diagram of an apparatus for processing a public sentiment topic according to another embodiment of the present application.

Fig. 4 is a schematic diagram of a system for processing a public sentiment topic according to another embodiment of the present application.

### Detailed Description

Hereinafter, the main principles and the specific embodiments together with the beneficial effects of the solutions according to embodiments of the present application will be explained in detail with reference to respective accompanying drawings.

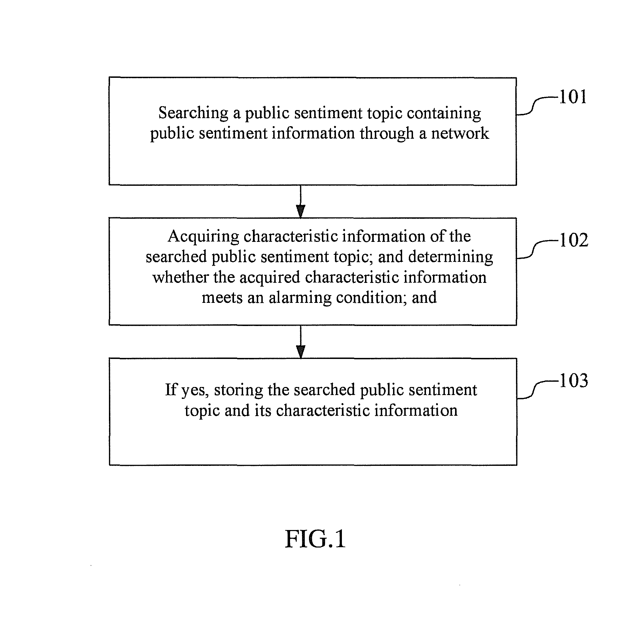

In order to solve the above problems, a method for processing a public sentiment topic according to an embodiment of the present application is provided. As shown in Fig. 1, the method comprises the following steps S101-S103.

In Step S101, a public sentiment topic containing public sentiment information is searched out in a network.

In particular, a user may input public sentiment information as search keyword into the network to search out the public sentiment topic containing the public sentiment information. The user may also search out the public sentiment topic by selecting public sentiment information stored in a database. The public sentiment information may be stored in the database in advance and updated periodically. Such public sentiment information may comprise publishers, publishing sites, publishing time, titles, classification and etc. The user may be provided actively with the public sentiment information when searching the public sentiment topic.

In Step S102, characteristic information of the public sentiment topic is acquired. And then it is determined whether the acquired characteristic information meets an alarming condition. In particular, propagation state of the public sentiment topic may be acquired in a designated website or the whole network. For example, in the designated website, associated topics and similarity of the public sentiment topic are acquired according to preset keyword rules and/or sample documents, which may be implemented by using a web crawler technology. Alternatively, in the whole network, the associated topics and similarity of the public sentiment topic may be acquired according to network-wide keywords by using a meta-searching technology. According to this step, raw statistic data, i.e., how many associated topics and similarity of the public sentiment topic exist in the designated website or the whole network are provided. Certainly, the associated topics comprise the public sentiment topic itself. When searching through the whole network, various types of sites, such as webpage, news, forum and blogs are mainly searched.

The logical relationship between the above keyword rules and sample documents may be "and" or "or". Complex conditions of Boolean logic operation may be used when searching in accordance with the keywords. When searching according to sample documents, a single or a plurality of text segments may be used to find the associated information so that the public sentiment topic can be comprehensively acquired from multiple aspects so as to effectively cope with the situation where one event may be described by many different approaches.

The characteristic information may comprise the amount of sensitive information, the amount of being reproduced, the amount of hits, the amount of comments, the length of time duration and the amount of associated topics of the public sentiment topic in networks. The characteristic information and/or the variation of the number may be acquired and then compared with corresponding preset alarming threshold. If the characteristic information and/or its variation are higher than the corresponding preset alarming thresholds, it is determined that the alarming condition is satisfied; otherwise, it is determined that the acquired characteristic information of the public sentiment topic does not meet the alarming condition. The above alarming threshold may be one or more in accordance with the types of the obtained characteristic information of the public sentiment topics. For example, if the amount of hits and replies are obtained, then a hit alarming threshold and a reply alarming threshold may be used. Further, when performing the determination, the characteristic information, or an increment or increasing rate (variation) of the characteristic information, or both may be used simultaneously.

For acquiring the sensitive information, it is required to segment the webpage text data containing the public sentiment topic, and then the sensitive information in the webpage text data is acquired according to preset sensitive words. In particular, the webpage text data may be segmented by using Chinese word segmentation technology and all words in the webpage text are analyzed by means of ascending and descending orders. Then sensitive words in the webpage are acquired according to preset sensitive words, which may be stored in a database and may be set under our national laws or set by the user himself/herself.

In Step 103, the public sentiment topic and its characteristic information are stored if the acquired characteristic information of the public sentiment topic meets the alarming condition.

In particular, when one or more characteristic information of the public sentiment topic meets the alarming condition, the public sentiment topic and its characteristic information may be stored. They may be analyzed and tracked periodically by a data mining technology to acquire the development trace of the public sentiment topic. For example, the public sentiment topic may be continuously tracked by periodically analyzing the reproduced situation and the changes of the amount of hits and comments of the public sentiment topic. The user may arrange or change specific time for the periodical analysis by modifying a timer.

Then, results of the analysis may be stored and shown to the viewer. The analysis results may be stored respectively in accordance with different time for analysis in order to view associated information of the public sentiment topic within a certain period. Such associated information comprises distribution state, the amount of hits and comments of the public sentiment topic and etc. A plurality of stored public sentiment topic may be classified based on the similarity so that analysis results of corresponding public sentiment topic, such as the associated information, the changing trend or determination whether or not the alarm shall be issued, may be looked up in a particular type of topics.

In addition, a public sentiment brief report may be generated according to the characteristic information of the public sentiment topic. For example, the public sentiment brief report may be generated and stored in analysis results by statistically analyzing the sites, publishing time and propagation paths of the public sentiment topic to facilitate the user better understanding of propagation rule of the public sentiments, and data basis for establishing a public sentiment process and guidance are provided and effects of the guidance may be also viewed.

From the above, it can be seen that, according to the method, it can be determined whether or not an alarming shall be issued by acquiring and checking the characteristic information of the public sentiment topic. In addition, the public sentiment topic can be managed and tracked sequentially. The change trend of propagation, hits and comments for the public sentiment topic can be also analyzed to establish a pre-alarming prompt. The public sentiment information in the internet can be analyzed comprehensively and automatically to provide data for generating the public sentiment brief report. Therefore, public sentiment events can be further understood comprehensively to provide a guide on how to cope with the public sentiment and to trace the result by guiding the public sentiment.

When searching a public sentiment topic, the user may add topics as desired and arrange a plurality of sample texts or keywords to describe the topic in multiple ways, so that the evolution trend of propagation of the topic can be analyzed comprehensively. In addition, the user may perform statistics for internet information by the meta-searching technology to understand reports regarding the public sentiment topic in the internet. The propagation of the public sentiment topic in the internet can be analyzed automatically and presented to the user by means of charts. For example, the change rules of information on being reproduced, the amount of hits and comments of the information associated with the public sentiment topic may be analyzed automatically and presented to the user. Therefore, the user can catch the propagation rule of public sentiment better, and various system functions for tracking public sentiment topics in the internet can be accomplished excellently.

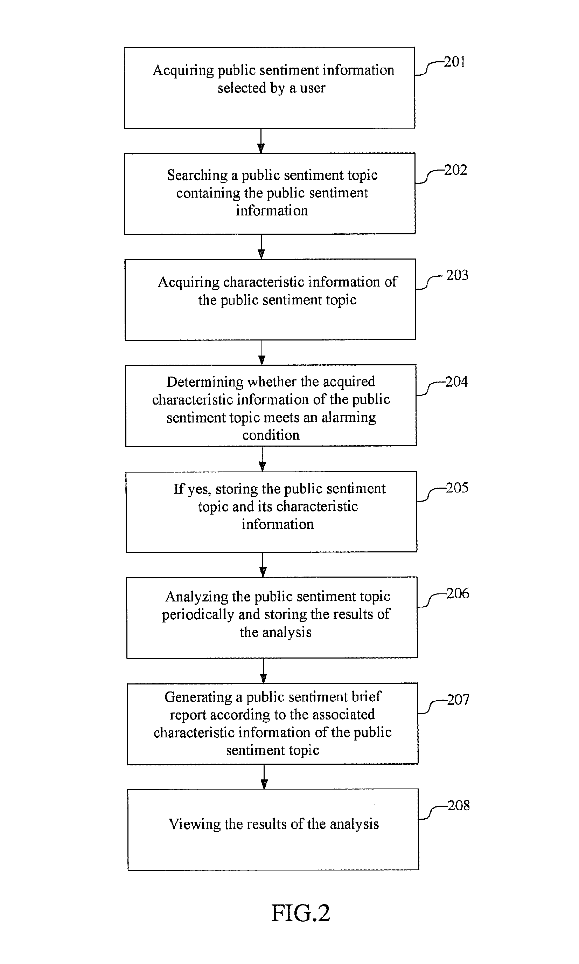

Hereinafter, the method for processing a public sentiment topic provided according to the present application is further described in detail by reference to specific embodiments as shown in Fig. 2.

In Step 201, the public sentiment information selected by a user is acquired. In particular, the user may input the pubic sentiment information as keyword to search or select the public sentiment information from previously provided information. Such public sentiment information includes, but is not limited to, publishers, publishing sites, publishing time, titles and classification.

In Step 202, a public sentiment topic containing the public sentiment information is searched in a network.

In particular, propagation state of the public sentiment topic may be acquired in a designated website or the whole network. For example, in the designated website, associated topics and similarity of the public sentiment topic are acquired according to preset keyword rules and/or sample documents by using a web crawler technology. Alternatively, in the whole network, the associated topics and similarity of the public sentiment topic may be acquired according to network-wide key words, which may be implemented by using a meta-searching technology. Then, the information on how many associated topics and similarity of the public sentiment topic exist in the designated or the whole network may be acquired, and the propagation paths of this topic may be also acquired. Certainly, the associated topics comprise the public sentiment topic itself. For the searching in the whole network, various types of sites, such as webpage, news, forum and blogs are mainly searched.

The logical relationship between the above keyword rules and sample documents may be "and" or "or". Complex conditions of Boolean logic operation are used when searching according to the key words. When searching according to the sample documents, a single or a plurality of text segments are employed to find associated information so that the public sentiment topic can be acquired comprehensively in multiple ways to effectively cope with the situation where one event may be described by many different approaches.

In Step 203, characteristic information of the public sentiment topic is acquired.

In particular, the number and/or its variation of characteristic information, such as sensitive information, the amount of the reproducing, the amount of hits, the amount of comments, the length of time duration and the amount of associated topics of the public sentiment topic in networks may be acquired and then compared with corresponding preset alarming threshold. If the number and/or its variation are higher than the corresponding preset alarming threshold, it is determined that the alarming condition is satisfied. The above alarming threshold may be one or more corresponding to the obtained characteristic information of the public sentiment topic. For example, if the amount of hits and replies are obtained, then a hit alarming threshold and reply alarming threshold are used. Further, when performing determination, the number of one or more characteristic information, an increment or increasing rate of the number of one or more characteristic information, or both may be used simultaneously.

In step 203, webpage text data is segmented by using Chinese word segmentation technology so that all words in the webpage text can be analyzed by means of ascending and descending orders. Then the sensitive words in the webpage are obtained according to preset sensitive words, which may be stored in a database and may be set under our national laws or set by the user himself/herself.

In Step 204, it is determined whether the acquired characteristic information of the public sentiment topic meets an alarming condition. When one or more characteristic information of the public sentiment topic meet the alarming condition, the public sentiment topic and its characteristic information may be stored. They may be analyzed and tracked periodically by a data mining technology to acquire the development trend of the public sentiment topic. For example, the public sentiment topic may be tracked continuously by periodically analyzing the reproduced situation and the change of the amount of hits and comments of the public sentiment topic. The user may arrange or change specific time for the periodical analysis by modifying a timer.

In Step 205, the public sentiment topic and its characteristic information are stored if the acquired characteristic information of the public sentiment topic meets the alarming condition.

In Step 206, the public sentiment topic is analyzed periodically and the results of the analysis are stored. When one or more characteristic information of the public sentiment topic meet the alarming condition, the public sentiment topic and its characteristic information may be stored. They may be analyzed and tracked periodically by a data mining technology to acquire the development trend of the public sentiment topic. For example, the public sentiment topic may be tracked continuously by periodically analyzing the reproduced situation and the change of the amount of hits and comments of the public sentiment topic. The user may arrange or change specific time for the periodical analysis by modifying a timer.

In Step 207, a public sentiment brief report is generated according to the associated characteristic information of the public sentiment topic. In particular, the public sentiment brief report may be generated and stored in analysis results by statistically analyzing the sites, publishing time and propagation paths of the public sentiment topic to facilitate the user better understanding of propagation rule of the public sentiment, so that data basis is established to provide a guide on how to handle with the public sentiment and to trace the result by guiding the public sentiment.

And then in Step 208, the results of the analysis are viewed. A plurality of stored public sentiment topic may be classified based on the similarity so that the analysis results of corresponding public sentiment topic, such as the associated information, the change trend and the actions of alarming may be looked up in a particular type of topics.

From the above, it can be seen that, according to the method for processing a public sentiment topic provided in the embodiment of the present application, by acquiring and determining the characteristic information of the public sentiment topic, it can be determined whether or not an alarm for the public sentiment topic shall be issued. In addition, the public sentiment topic can be managed and tracked sequentially. The change trend of propagation, hits and comments for the public sentiment topic can be analyzed and a pre-alarming prompt for those topics required to be pre-alarmed can be achieved. The public sentiment information in the internet can be comprehensively and automatically analyzed to provide data for generating the public sentiment brief report. Therefore, public sentiment events can be further understood comprehensive to provide a guide on how to cope with public sentiment and the public sentiment guidance can be also tracked and analyzed sequentially.

When searching a public sentiment topic, the user may add desired topics as keyword and arrange a plurality of sample texts or keywords to describe the topic in multiple ways, so that the evolution trend of propagation of the topic can be analyzed comprehensively. In addition, the user may perform statistics for the internet information by the meta-searching technology to understand reports regarding the public sentiment topic in the internet. The propagation of the public sentiment topic in the internet can be analyzed automatically and presented to the user by means of charts. For example, the change rules of information on being reproduced, the amount of hits and comments of the information associated with the public sentiment topic may be analyzed automatically and presented to the user. Therefore, the user can catch the propagation rule of public sentiment better, and various system functions for tracking public sentiment topics in the internet can be accomplished excellently. Therefore, the user can grasp the propagation rule of public sentiment better, and various system functions for tracking public sentiment topic in the internet can be accomplished excellently.

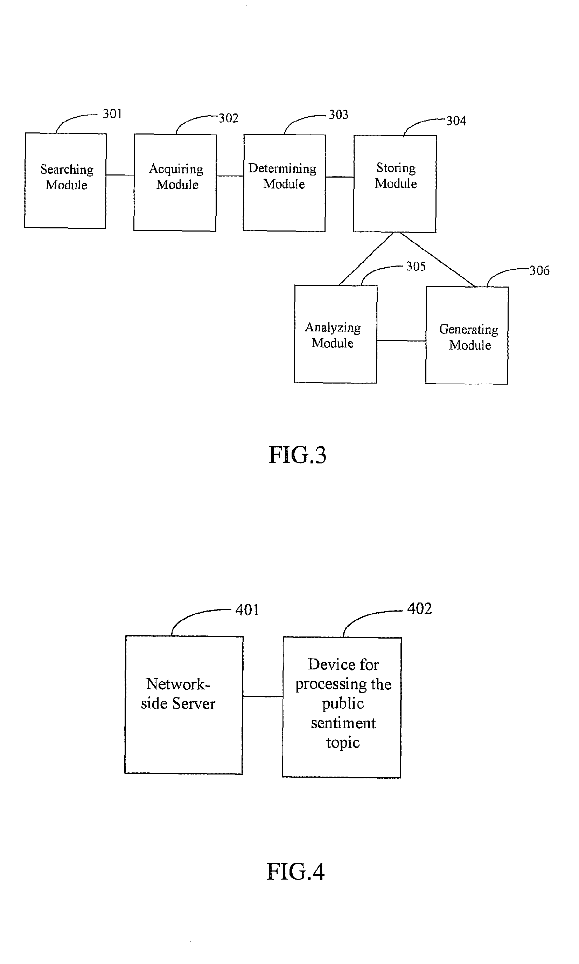

Accordingly, an apparatus for processing a public sentiment topic is provided according to the embodiments of the present application. As shown in Fig. 3, the apparatus comprises a searching module 301 configured to search a public sentiment topic containing public sentiment information in a network, an acquiring module 302 configured to acquire characteristic information of the public sentiment topic, a determining module 303 configured to determine whether the characteristic information of the public sentiment topic meets an alarming condition, and a storage module 304 configured to store the public sentiment topic and its characteristic information if the acquired characteristic information of the public sentiment topic meets the alarming condition.

Preferably, the acquiring module 302 may be configured to acquire associated topics and similarity of the public sentiment topic according to preset keyword rules and/or sample documents, in a designated website; and/or to acquire associated topics and similarity of the public sentiment topic according to network-wide keywords of the public sentiment topic thorough the whole network.

Preferably, the acquiring module 302 may be configured to segment webpage text data containing the public sentiment topic to acquire sensitive information therein according to preset sensitive words. Preferably, the determining module 303 may be further configured to acquire and compare the value of characteristic information and/or the variation of the characteristic information with corresponding preset alarming threshold. If the acquired number and/or its variation of the characteristic information are higher than the corresponding alarming thresholds, it is determined that the acquired characteristic information of the public sentiment topic meets the alarming condition.

Preferably, the apparatus may further comprise an analyzing module 305 configured to analyze the public sentiment topic and its characteristic information periodically by using a data mining technology. The results of the analysis may be stored and shown to the user.

Preferably, the apparatus may further comprise a generating module 306 configured to generate a public sentiment brief report according to the characteristic information of the public sentiment topic.

From the above, it can be seen that, according to the apparatus for processing a public sentiment topic provided in the embodiment of the present application, it can be determined if an alarming for the public sentiment topic will be issued by acquiring and checking the characteristic information of the public sentiment topic. In addition, the public sentiment topic can be managed and tracked sequentially. The change trend of propagation, hits and comments for the public sentiment topic can be analyzed and a pre-alarming prompt for those topics can be achieved. The public sentiment information in the internet can be comprehensively and automatically analyzed to provide data for generating the public sentiment brief report. Therefore, public sentiment events can be further understood comprehensively to provide public guidance on how to cope with the public sentiment events and he public sentiment guidance can be tracked and analyzed sequentially.

When searching a public sentiment topic, the user may add desired topics and arrange a plurality of sample texts or keywords to describe the topic in multiple ways, so that the evolution trend of propagation of the topic can be analyzed comprehensively. In addition, the user may perform statistics for the internet information by the meta-searching technology to understand reports regarding the public sentiment topic in the internet. The propagation of the public sentiment topic in the internet can be analyzed automatically and presented to the user by means of charts. For example, the change rules of information on being reproduced, the amount of hits and comments of the information associated with the public sentiment topic may be analyzed automatically and presented to the user. Therefore, the user can catch the propagation rule of public sentiment better, and various system functions for tracking public sentiment topics in the internet can be accomplished excellently.

Accordingly, a system for processing a public sentiment topic is provided in embodiments of the present application. As shown in Fig. 4, the system comprises a network-side server 401 and a device for processing the public sentiment topic 402.

The network-side server 401 is configured to provide a public sentiment topic containing public sentiment information.

The device for processing the public sentiment topic 402 is configured to search a public sentiment topic containing the public sentiment information, acquire characteristic information of the public sentiment topic, and determine whether or not the characteristic information of the acquired public sentiment topic meets an alarming condition. If yes, the device stores the determined public sentiment topic and its characteristic information.

In view of the above, it can be seen that, according to the method, apparatus and system for processing the public sentiment topic provided in the embodiments of the present application, it is determined if a pre-alarming for the public sentiment topic shall be issued by acquiring and determining the characteristic information of the public sentiment topic. In addition, the public sentiment topic can be managed and tracked sequentially. The change trend of propagation, hits and comments for the public sentiment topic can be analyzed and a pre-alarming prompt for those topics can be achieved. The public sentiment information in the internet can be comprehensively and automatically analyzed to provide data for generating the public sentiment brief report. Therefore, public sentiment events can be further understood comprehensively to provide a public guidance how to cope with the sentiment events. And the public sentiment guidance can be also tracked and analyzed sequentially.

When searching a public sentiment topic, the user may add topics as desired and arrange a plurality of sample texts or keywords to describe the topic in multiple ways, so that the evolution trend of propagation of the topic can be analyzed comprehensively. In addition, the user may perform statistics for internet information by the meta-searching technology to understand reports regarding the public sentiment topic in the internet. The propagation of the public sentiment topic in the internet can be analyzed automatically and presented to the user by means of charts. For example, the change rules of information on the reproduced, the amount of hits and comments of the information associated with the public sentiment topic may be analyzed automatically and presented to the user. Therefore, the user can catch the propagation rule of public sentiment better, and various system functions for tracking public sentiment topics in the internet can be accomplished excellently.

Obviously, various modifications and variations can be made to the present application by the skilled in the art without departing from the spirit and range of the present application. Thus, the application intends to contain these modifications and variations, if these modifications and variations are defined within the scope of the following claims and their equivalents.

## Claims

1. A method for processing a public sentiment topic comprising:
searching out a public sentiment topic through a network, the topic containing public sentiment information;
acquiring characteristic information of the searched public sentiment topic;
determining if the acquired characteristic information meets an alarming condition; and
if yes, storing the searched public sentiment topic and its characteristic information.

2. The method according to claim 1, wherein the public sentiment information is stored and updated periodically in a database.

3. The method according to claim 1, wherein the step of acquiring comprises:
acquiring, in a designated website of the network, associated topics and
similarity of the public sentiment topic according to preset keyword rules and/or sample documents; and/or
acquiring, in the network, associated topics and similarity of the public sentiment topic according to network-wide keywords of the public sentiment topic.

4. The method according to claim 3, wherein the characteristic information of the public sentiment topic at least comprises sensitive information, the amount of reproducing, the amount of hits, the amount of comments and the amount of associated topics.

5. The method according to claim 4, wherein, the sensitive information is acquired by segmenting the webpage text data according to preset sensitive words.

6. The method according to claim 4, wherein the step of determining comprises:
acquiring the number of the characteristic information and/or its variation of the number;
comparing the acquired number and/or the variation with preset alarming thresholds,
if the acquired number and/or the variation amount are higher than the threshold, it is determined that the acquired characteristic information of the public sentiment topic meets the alarming condition;
otherwise, it is determined that the acquired characteristic information of the public sentiment topic does not meet the alarming condition.

7. The method according to claim 1, wherein, after the step of storing, the method further comprises:
analyzing periodically the stored public sentiment topic and its characteristic information by using a data mining technology; and
storing and showing results of the analysis.

8. The method according to claim 1, wherein, after the step of storing, the method further comprises:
generating a public sentiment brief report according to the stored characteristic information of the public sentiment topic.

9. An apparatus for processing a public sentiment topic comprising:
a searching module configured to search a public sentiment topic containing public sentiment information in a network;
an acquiring module configured to acquire characteristic information of the searched public sentiment topic;
a determining module configured to determine whether the acquired characteristic information meets an alarming condition; and
a storage module configured to store the public sentiment topic and its characteristic information if the acquired characteristic information meets an alarming condition.

10. The apparatus according to claim 9, wherein the acquiring module is configured to acquire associated topics and similarity of the public sentiment topic according to preset keyword rules and/or sample documents in a designated network, and/or to acquire associated topics and similarity of the public sentiment topic according to network-wide keywords of the public sentiment topic in the whole network.

11. The apparatus according to claim 9, wherein the acquiring module is configured to segment webpage text data containing the public sentiment topic and acquire sensitive information in the webpage text data according to preset sensitive words.

12. The apparatus according to claim 9, wherein the determining module is configured to acquire and compare the number and/or the variation amount of the characteristic information with a preset alarming threshold; wherein
if the number and/or the variation amount of the characteristic information is higher than the alarming threshold, it is determined that the acquired characteristic information meets the alarming condition; otherwise, it is determined that the acquired characteristic information does not meet the alarming condition.

13. The apparatus according to claim 9, further comprising:
an analyzing module configured to analyze the public sentiment topic and its characteristic information periodically by using data mining technology and to store and show results of the analysis.

14. The apparatus according to claim 9, further comprising:
a generating module configured to generate a public sentiment brief report according to the characteristic information of the public sentiment topic.

15. A system for processing a public sentiment topic comprising:
a network-side server configured to provide a public sentiment topic containing public sentiment information; and
a device for processing a public sentiment topic configured to:
search a public sentiment topic containing the public sentiment information,
acquire characteristic information of the searched public sentiment topic,
determine whether the characteristic information of the acquired public sentiment topic meets an alarming condition, and
store the determined public sentiment topic and its characteristic information if the characteristic information of the acquired public sentiment topic meets the alarming condition.
